Europäisches Patentamt

European Patent Office

Office européen des brevets

(19)

(11) Veröffentlichungsnummer : **0 516 010 B1**

(12) **EUROPÄISCHE PATENTSCHRIFT**

(45) Veröffentlichungstag der Patentschrift :
**21.12.94 Patentblatt 94/51**

(51) Int. Cl.$^5$ : **F16H 3/08, F16H 37/04**

(21) Anmeldenummer : **92108747.4**

(22) Anmeldetag : **23.05.92**

(54) **Getriebe.**

(30) Priorität : **28.05.91 US 706440**

(43) Veröffentlichungstag der Anmeldung :
**02.12.92 Patentblatt 92/49**

(45) Bekanntmachung des Hinweises auf die
Patenterteilung :
**21.12.94 Patentblatt 94/51**

(84) Benannte Vertragsstaaten :
**AT BE CH DE ES FR GB GR IT LI LU NL SE**

(56) Entgegenhaltungen :
**FR-A- 2 205 156**
**GB-A- 1 162 333**

(73) Patentinhaber : **DEERE & COMPANY**
**1 John Deere Road**
**Moline, Illinois 61265 (US)**

(72) Erfinder : **Rodeghiero, Reno Antonio**
**5437 West Griffith Road**
**Hudson, Iowa 50643 (US)**
Erfinder : **Puetz, Craig Alan**
**735 Excelsior Lane**
**Waterloo, Iowa 50701 (US)**
Erfinder : **Malm, Donald Irwin**
**1715 Drury Lane**
**Cedar Falls, Iowa 50613 (US)**
Erfinder : **Johnson, Douglas Rene**
**266 Prospect Blvd.**
**Waterloo, Iowa 50701 (US)**

(74) Vertreter : **Feldmann, Bernhard et al**
**DEERE & COMPANY**
**European Office**
**Patent Department**
**D-68140 Mannheim (DE)**

EP 0 516 010 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Getriebe, insbesondere ein Lastschaltgetriebe, mit mehreren Vorwärtsgängen sowie wenigstens einem Rückwärtsgang eines Gangschaltgetriebeteils zur wahlweisen Einstellung mehrerer Vorwärts- bzw. Rückwärts-Gangübertragungsverhältnisse, mit mehreren Bereichen eines Gruppengetriebeteils zur wahlweisen Einstellung mehrerer Gruppenübertragungsverhältnisse und mit Kupplungen zur wahlweisen Serienschaltung einer der Gänge mit einer der Gruppen, so daß sich unterschiedliche zusammengesetzte Getriebeübertragungsverhältnisse ergeben.

Derartige Getriebe finden insbesondere bei landwirtschaftlichen oder Nutzfahrzeugen, wie bei Ackerschleppern Anwendung.

Im Betrieb wird die Treibstoffzufuhr zum Motor eines Ackerschleppers gewöhnlich fest vorgegeben, und die Fahrzeuggeschwindigkeit wird durch Änderungen der Getriebegänge eingestellt. Um für unterschiedliche Belastungen eine gleichbleibende Fahrgeschwindigkeit aufrecht erhalten zu können, oder um für eine maximale Produktivität einen maximalen Leistungsoutput zu erreichen, sollten insbesondere für den Übersetzungsbereich des Getiebes, der bei der Bodenbearbeitung Anwendung findet, die Übertragungsverhältnisse zweier benachbarter Gänge nahe beieinander liegen. Die Unterschiede sollten nach Möglichkeit weniger als 1 km/h betragen.

Die Abstufung zwischen zwei benachbarten Getriebeübertragungsverhältnissen ist die prozentuale Differenz der Übertragungsverhältnisse der benachbarten Gänge, durch die bei einem Gangwechsel eine Änderung der Fahrzeuggeschwindigkeit hervorgerufen wird. Üblicherweise werden Ackerschleppergetriebe so ausgelegt, daß sie in etwa gleiche Abstufungen zwischen allen Gängen aufweisen. Diese ergeben sich gewöhnlich durch die dem Getriebe eigene Konstruktion. Da sowohl durch die Kosten als auch durch die Akzeptanz der Bedienungsperson die maximale Anzahl der Gänge eines Getriebes begrenzt ist, wird gewöhnlich ein Kompromiß zwischen einer engen Abstufung der Gänge und der gesamten Geschwindigkeitsdifferenz zwischen dem niedrigsten und dem höchsten Gang eingegangen. Schlepper mit einer guten Gangabstufung im Feldarbeitsbereich besitzen daher oft eine für Transportfahrten zu geringe Spitzengeschwindigkeit oder eine zu hohe Geschwindigkeit im ersten Gang.

Eine weitere Anforderung an das Fahrzeuggetriebe liegt in der Schaltqualität. Sie beinhaltet das subjektive Wahrnehmungsvermögen der Bedienungsperson hinsichtlich der Stoßfreiheit beim Gangwechsel und hängt von der wahrnehmbaren Geschwindigkeitssteigerung, den Kabinenvibrationen und den Schaltgeräuschen ab. Diese Größen werden stark von zwei Hauptfaktoren beeinflußt: erstens der Anzahl der während eines Gangwechsels betätigten Getriebekupplungen und zweitens die mit jeder Getriebekupplungsbetätigung verbundene Änderung der Übertragungsverhältnisse.

Gewöhnlich haben Ackerschleppergetriebe Schaltungen, bei denen drei Kupplungspaare einbezogen sind, wobei wenigstens eine Kupplung sehr große Änderungen des Übertragungsverhältnisses herbeiführt. Hierbei schaltet das Getriebe nicht weich. Diese Dreikupplungsumschaltungen treten meist im Bodenbearbeitungs-Bereich auf. Da jedoch in der Regel die Bedienungsperson gerade im Bodenbearbeitungs-Bereich die häufigsten Umschaltungen vornimmt (um unter wechselnden Belastungen die Geschwindigkeit optimal einstellen zu können), treten diese unerwünschten Dreikupplungsumschaltungen besonders häufig auf.

Der Getriebewirkungsgrad wird im wesentlichen durch die Anzahl der Zahneingriffe beeinflußt, die bei der Leistungsübertragung durch das Getriebe zum Tragen kommen. Eine Daumenregel besagt, daß jeder Zahneingriff 1,5 % der übertragenen Leistung aufbraucht. Heute übliche Lastschaltgetriebe für Ackerschlepper übertragen die Leistung von dem Motor bis zum Ausgangskegelritzel über drei bis sieben Zahneingriffe. Die hierdurch hervorgerufene Leistungsminderung von 4,5 bis 10 % erfordert mehr Treibstoff und ein größeres Kühlsystem als ein leistungsfähigeres Getriebe.

Die der Erfindung zugrunde liegende Aufgabe wird darin gesehen, ein Getriebe der eingangs genannten Art anzugeben, welches eine optimale Abstufung zwischen den Gängen ermöglicht, eine weiche, geräuscharme Umschaltung erlaubt und einen hohen Getriebewirkungsgrad aufweist.

Die Aufgabe wird durch die Merkmale des Patentanspruches 1 gelöst. Weitere vorteilhafte Ausgestaltungen und Weiterbildungen der Erfindung gehen aus den Unteransprüchen hervor.

Ein besonderer Vorteil bei dem erfindungsgemäßen Getriebe liegt darin, daß unterschiedlichen Geschwindigkeitsbereichen unterschiedliche Abstufungen zugeordnet werden können. Unter Abstufung ist dabei die prozentuale Änderung des Übertragungsverhältnisses zwischen zwei benachbarten Gängen gemeint.

Beispielsweise kann die Betriebsgeschwindigkeit eines Ackerschleppers grundsätzlich in drei Anwendungsbereiche unterteilt werden:

1. der Zapfwellenbetrieb (PTO-Betrieb) mit Fahrzeuggeschwindigkeiten von weniger als 5 km/h,
2. der Bodenbearbeitungs- oder Hauptarbeitsbetrieb mit Fahrzeuggeschwindigkeiten zwischen 5 und 15 km/h und

3. der Transportbetrieb mit Fahrzeuggeschwindigkeiten von mehr als 15 km/h.

Die vorliegende Erfindung erkennt, daß der Zapfwellen- und der Transportbereich ohne Nachteil erheblich größere Abstufungen aufweisen können als der Hauptarbeitsbereich. Für Getriebeübertragungsverhältnisse, die sich jeweils einer ersten, zweiten oder dritten Gruppe zuordnen lassen, sind vorzugsweise die Abstufungen der Getriebeübertragungsverhältnisse in der ersten und dritten Gruppe in etwa doppelt so groß wie die in der zweiten Gruppe.

Zweckmäßigerweise hat das Getriebe in dem Hauptarbeitsbereich relativ enge Abstufungen von ungefähr 13 % und in dem Zapfwellenbereich und dem Transportbereich relativ große Abstufungen von ungefähr 28 %. Hierdurch können weitere Gänge in dem Bereich, in dem sie erwünscht sind (d. h. im Hauptarbeitsbereich), bereitgestellt werden und werden nicht in Bereichen verschwendet, wo sie nutzlos sind (d. h. im PTO-und Transportbereich).

Das erfindungsgemäße Getriebe weist eine Eingangswelle, eine Nebenwelle und eine Ausgangswelle auf. Zwischen der Eingangswelle und der Nebenwelle werden vier Vorwärtsgänge und (mit Hilfe eines Umkehrrades) ein Rückwärtsgang durch Stirnverzahnungen gebildet. Die Abstufungen der Vorwärtsgänge sind so gewählt, daß das Übertragungsverhältnis jeweils mit etwa 28 % (d. h. mit einem Faktor von etwa 1,28) zunimmt. Alle Zahneingriffe sind unabhängig voneinander durch je eine unabhängig steuerbare, beispielsweise hydraulisch betätigbare Kupplung einrückbar.

Zwischen der Nebenwelle und der Ausgangswelle sind vorzugsweise vier Bereiche gebildet. Für drei Bereiche werden Stirnverzahnungen verwendet, die unabhängig voneinander durch unabhängig steuerbare Kupplungen einrückbar sind. Ein gesondert einrückbares Planetengetriebesystem ist mit einer der Stirnverzahnungen in Serie geschaltet, wodurch der Bereich mit dem tiefsten Übertragungsverhältnis gebildet wird.

Die Abstufungen der Getriebeübertragungsverhältnisse sind vorzugsweise so gewählt, daß bei Umschaltungen von einem zusammengesetzten Getriebeübertragungsverhältnis zu dem nächst höheren Getriebeübertragungsverhältnis nur dann relativ große Drehmomentänderungen innerhalb des Getriebes auftreten, wenn eine Umschaltung von dem ersten Bereich, der in Serie mit dem größten Vorwärtsgang liegt, zu dem zweiten Bereich, der in Serie mit dem kleinsten Vorwärtsgang liegt, oder eine Umschaltung von dem zweiten Bereich, der in Serie mit dem größten Vorwärtsgang liegt, zu dem dritten Bereich, der in Serie mit dem kleinsten Vorwärtsgang liegt, erfolgt.

Gemäß einer bevorzugten Ausgestaltung der Erfindung wird der zweite Bereich durch einen ersten und einen zweiten Subsidiarbereich gebildet, wobei die Übertragungsverhältnisse der Subsidiarbereiche derart abgestuft sind, daß die zusammengesetzten Getriebeübertragungsverhältnisse, die sich bei Serienschaltung des ersten Subsidiarbereiches mit den Vorwärtsgängen ergeben, und die zusammengesetzten Getriebeübertragungsverhältnisse, die sich bei Serienschaltung des zweiten Subsidiarbereiches mit den Vorwärtsgängen ergeben, alternierend ineinander geschichtet sind.

Dabei sind zweckmäßigerweise ein erster, zweiter, dritter und vierter Vorwärtsgang vorgesehen, und die Abstufung zwischen dem ersten und dem zweiten Subsidiarbereich ist so gewählt, daß die zusammengesetzten Getriebeübertragungsverhältnisse, die sich bei Serienschaltung des ersten, zweiten bzw. dritten Ganges mit dem zweiten Subsidiarbereich ergeben, zwischen den ersten und zweiten, zweiten und dritten bzw. dritten und vierten zusammengesetzten Getriebeübertragungsverhältnissen liegen, die sich bei Serienschaltung des ersten, zweiten, dritten bzw. vierten Ganges mit dem ersten Subsidiarbereich ergeben. Die Umschaltung der beteiligten Kupplungen erfolgt hierbei zweckmäßigerweise automatisch, um die Bedienungsperson zu entlasten.

Das Untersetzungsverhältnis des Bereiches für die höchste Geschwindigkeit (D-Bereich) wird vorzugsweise so ausgewählt, daß sich bei gegebener Maschinendrehzahl, Reifengröße und Endgetriebeübersetzung die gesetzlich maximal zulässige und/oder erwünschte Tranportgeschwindigkeit des Fahrzeuges ergibt. Die Übertragungsverhältnisse der übrigen Bereiche lassen sich dann als Funktion des D-Bereichsübertragungsverhältnisses (Grundübertragungsverhältnis) angeben. Das C-Bereichsübertragungsverhältnis (der C-Bereich schließt sich nach unten an den D-Bereich an) wird so ausgewählt, daß es ungefähr $1,28^4$ mal dem D-Bereichsübertragungsverhältnis ist. Das B-Bereichsübertragungsverhältnis (der B-Bereich schließt sich nach unten an den C-Bereich an) wird so ausgewählt, daß es ungefähr $1,28^{4,5}$ mal dem D-Bereichsübertragungsverhältnis ist. Das A-Bereichsübertragungsverhältnis (der A-Bereich schließt sich nach unten an den B-Bereich an) wird so ausgewählt, daß es ungefähr $1,28^8$ mal dem D-Bereichsübertragungsverhältnis ist.

Vorzugsweise ist das Getriebe mit einem wahlweisen Vorderradantrieb versehen. Dieser läßt sich sehr leicht verwirklichen, indem eine zu der Ausgangswelle fluchtende Frontantriebswelle vorgesehen ist, die sich mittels einer Kupplung wahlweise mit der Ausgangswelle verbinden läßt.

Ferner enthält das Getriebe vorzugsweise eine Parkbremse, durch die sich die Ausgangswelle festsetzen läßt.

Zweckmäßigerweise ist der Planetenträger der Planetenanordnung des A-Bereiches mit der Ausgangswelle drehfest verbunden. Die Parkbremse kann dann durch eine den Planetenträger gegenüber dem Getriebegehäuse festsetzende Bremse realisiert werden. Dadurch wird eine Abbremsung über den relativ großen Durchmesser des Planetenträgers möglich.

Die Schaltqualität des Getriebes ist gegenüber üblichen Getrieben wesentlich verbessert, weil:

1. keine Dreikupplungsumschaltungen erforderlich sind,

2. bei zehn der fünfzehn Vorwärtsgangwechsel lediglich eine Kupplung betätigt wird,

3. bei drei der fünfzehn Vorwärtsgangwechsel zwei Kupplungen beteiligt sind, bei denen die Durchmesserverhältnisse der miteinander in Eingriff stehenden Zahnräderpaare sehr nahe beieinander liegen, so daß lediglich geringe Geschwindigkeits- und Drehmomentänderungen innerhalb des Getriebes auftreten, und

4. bei den verbleibenden zwei Vorwärtsgangwechsel lediglich zwei Kupplungsbetätigungen mit größeren Abstufungen der Übertragungsverhältnisse beteiligt sind, die jedoch in Schaltbereichen liegen, die relativ selten Verwendung finden.

Der Wirkungsgrad konnte bei dem erfindungsgemäßen Getriebe besonders dadurch verbessert werden, daß in den häufig angewendeten Bereichen des Hauptarbeitsbetriebes und des Transportbetriebes lediglich zwei Zahneingriffe für die Übertragung der Leistung von der Antriebsmaschine zu dem Ausgangskegelrad erforderlich sind. Dadurch ergibt sich gegenüber üblichen Getrieben eine Wirkungsgradverbesserung von 1,5 bis 7 %.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    eine schematische Darstellung der Anordnung der in den Figuren 2a, 2b, 2c und 2d dargestellten Getriebeteile zueinander,

Fig. 2    die aus den Fig. 2a, 2b, 2c und 2d zusammengesetzte Querschnittsdarstellung eines erfindungsgemäßen Getriebes entlang der Schnittlinie 2 - 2 in Fig. 3,

Fig. 3    die schematische Endansicht eines Getriebes gemäß Fig. 2 und

Fig. 4    eine Darstellung der Getriebeausgangsdrehzahlen und Fahrzeuggeschwindigkeiten für unterschiedliche Untersetzungsverhältnisse des in Fig. 2 dargestellten Getriebes.

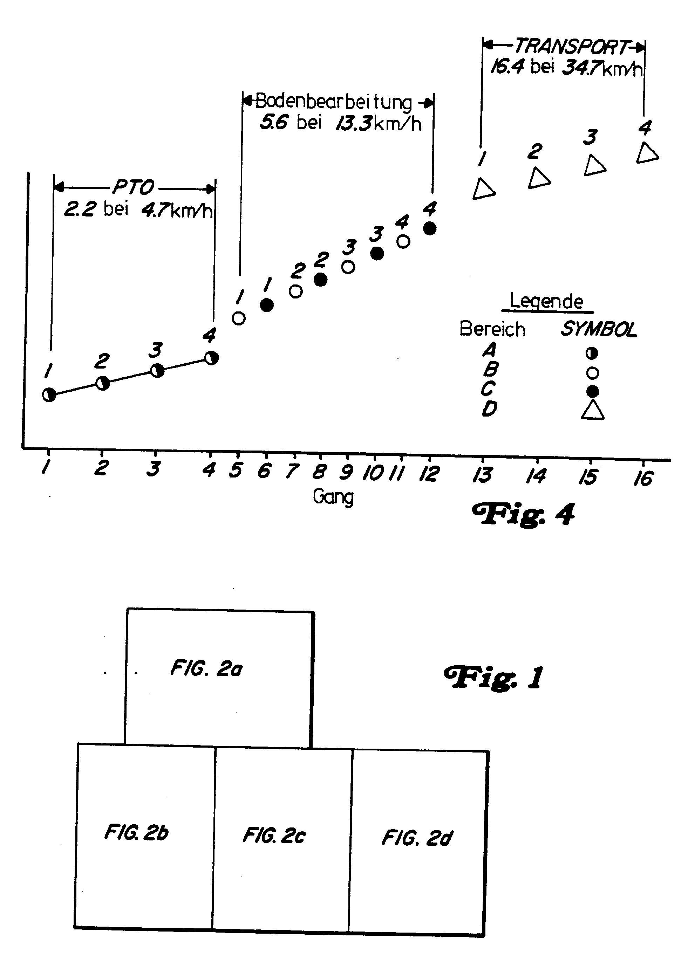

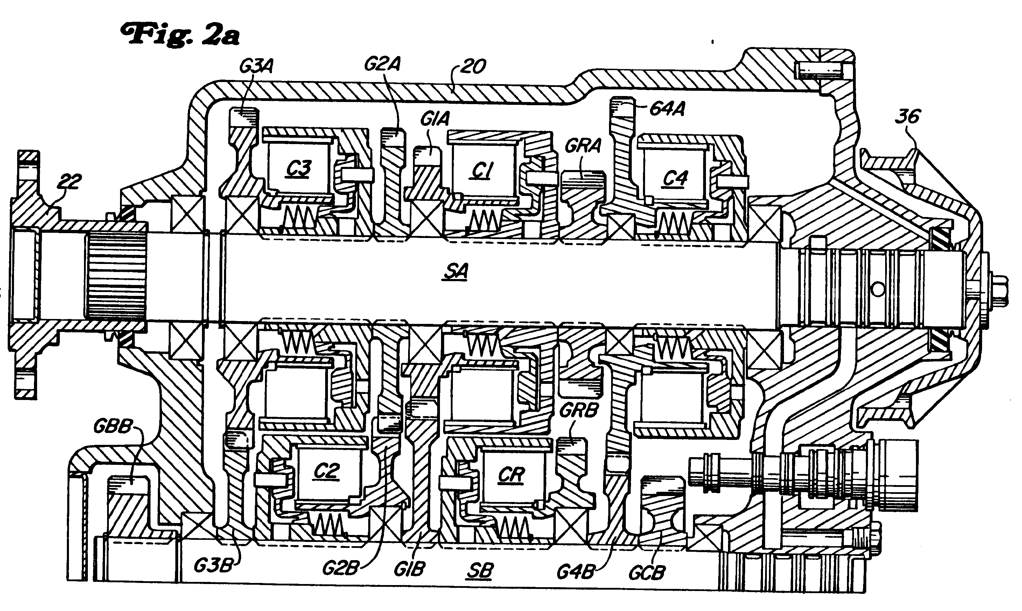

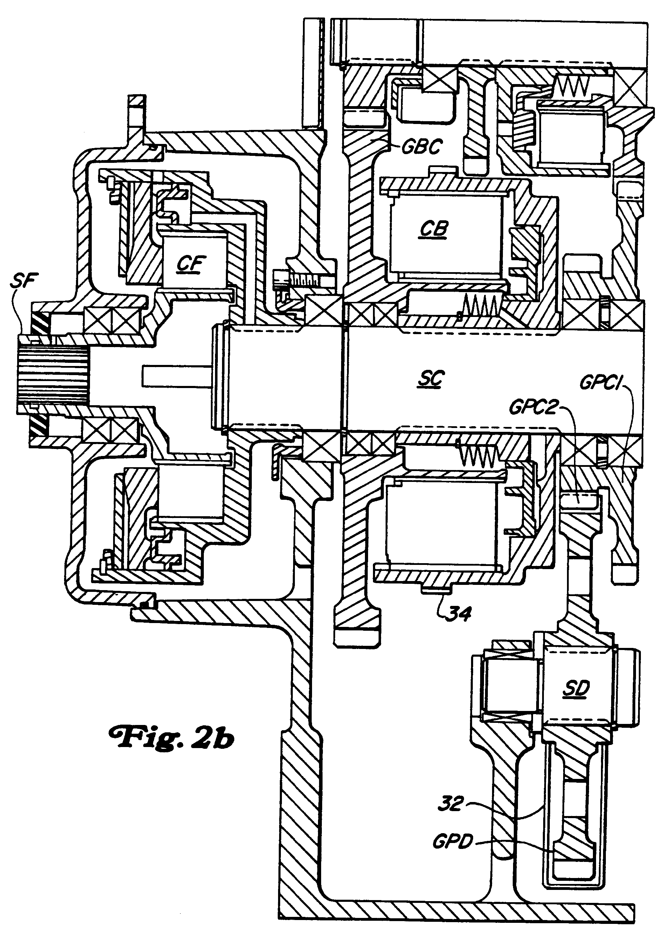

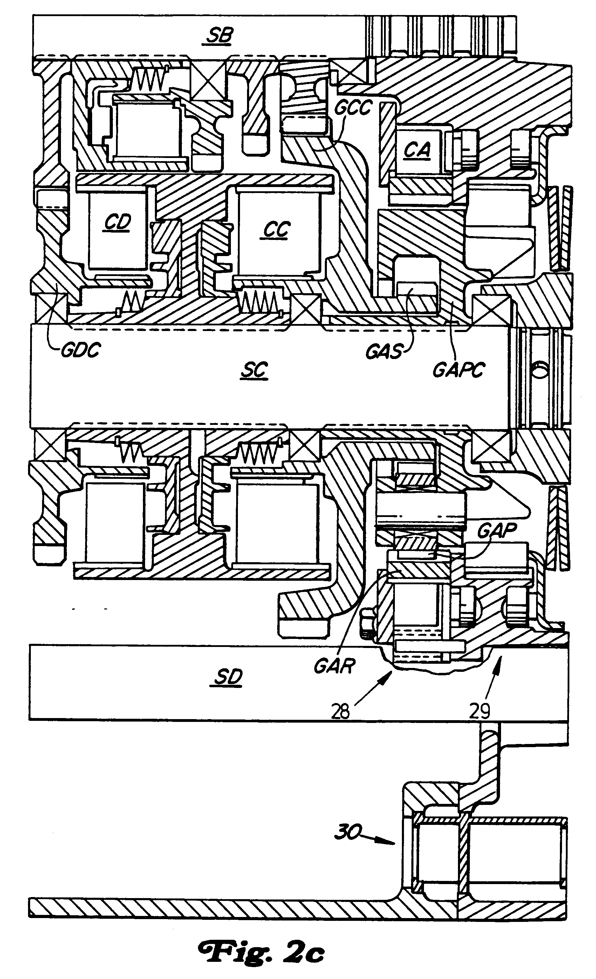

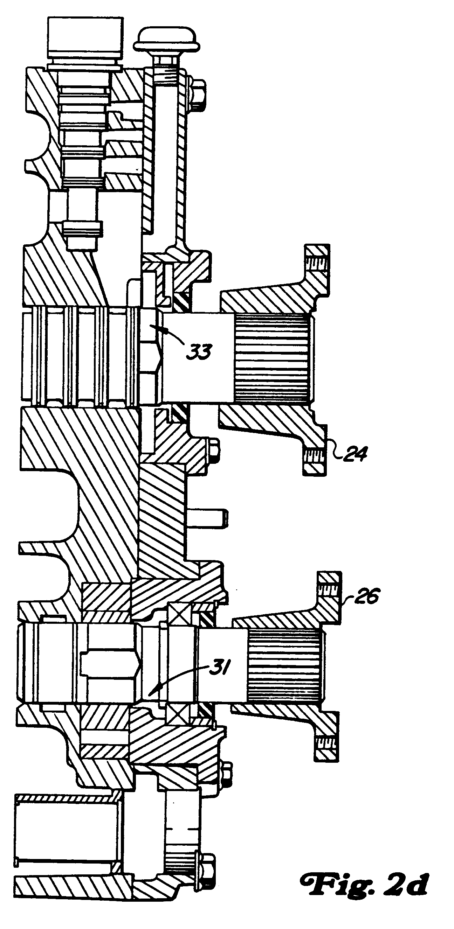

Im folgenden wird davon ausgegangen, daß der Leser die Figuren 2a, 2b, 2c und 2d gemäß dem der Fig. 1 entnehmbaren Lageplan zusammensetzt.

Der besseren Übersichtlichkeit halber werden nachfolgend die Wellen mit dem Anfangsbuchstaben S (shaft) und einem fortlaufenden Buchstaben gemäß SA, SB, SC usw. bezeichnet. Auf ähnliche Weise erhalten die Kupplungen den Anfangsbuchstaben C (clutch) und eine die Kupplung bezeichnende Zahl oder einen Buchstaben, z. B. C1, C2, CR, CD. Die Zahnräder werden durch den Anfangsbuchstaben G (gear) gekennzeichnet, an den sich die Nummer oder der zweite Buchstabe der Kupplung, durch welche der Eingriff des Zahnrads gesteuert wird, und der zweite Buchstabe der Welle anschließt, auf der das Zahnrad befestigt ist, z. B. G1A, G1B, GRA. Die Bezugszeichen für die Wellen, Kupplungen und Zahnräder sind in der Tabelle 1 aufgelistet:

## Tabelle 1

| Welle | Kupplung auf der Welle | Zahnrad auf der Welle |
|---|---|---|
| SA | C1, C3, C4 | G1A, G2A, G3A, G4A, GRA |
| SB | C2, CR | G1B, G2B, G3B, G4B, GRB, GBB, GCB |
| SC | CA, CB, CC, CD | GBC, GCC, GDC, GPC1, GPC2, GAS, GAP, GAPC, GAR |
| SD | | GPD |
| SF | CF | |
| SI | | GRI |

4

Die Eingangswelle SA ist drehbar in dem Getriebegehäuse 20 gelagert. Ein Ende der Eingangswelle SA enthält zur Einleitung der Antriebskraft einer Antriebsmaschine ein Eingangskuppelstück 22, welches durch Keilverzahnungen oder auf andere Weise auf der Eingangswelle SA drehfest montiert ist. Parallel und benachbart zur Eingangswelle SA ist eine Nebenwelle SB in dem Getriebegehäuse 20 drehbar gelagert. Parallel und benachbart zur Nebenwelle SB ist eine Ausgangswelle SC in dem Getriebegehäuse 20 drehbar gelagert. Parallel und benachbart zu der Ausgangswelle SC ist eine PTO-Welle SD, die dem Zapfwellenantrieb dient, drehbar in dem Getriebegehäuse 20 gelagert. Auf der Ausgangswelle SC und der PTO-Welle SD sind Ausgangskuppelstücke 24 und 26 vorgesehen, durch die die Ausgangsleistung des Getriebes auf nicht dargestellte Fahrzeugräder bzw. Arbeitsmaschinen übertragen wird.

Auf der Eingangswelle SA sind gemäß Fig. 2 von links nach rechts die Kupplungen C3, C1 und C4 angeordnet, die unabhängig voneinander betätigbar sind, um wahlweise die zugehörigen Zahnräder G3A, G1A bzw. G4A drehfest mit der Eingangswelle SA zu verbinden. Das Zahnrad G2A ist zwischen der Kupplung C3 und dem Zahnrad G1A angeordnet und durch Keilverzahnungen oder auf andere Weise drehfest mit der Eingangswelle SA verbunden. Ähnlich ist das Zahnrad GRA angeordnet und zwischen der Kupplung C1 und dem Zahnrad G4A drehfest mit der Eingangswelle SA verbunden.

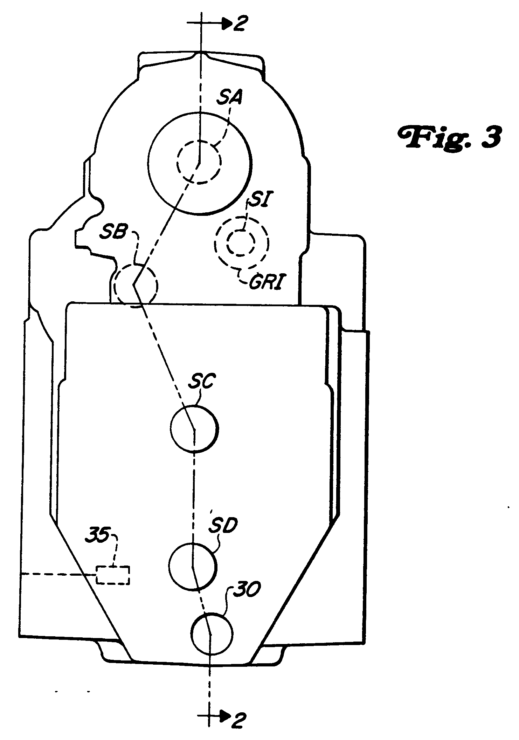

Auf der Nebenwelle SB sind gemäß Fig. 2 von links nach rechts die Kupplungen C2 und CR angeordnet, die unabhängig voneinander betätigbar sind, um wahlweise die zugehörigen Zahnräder G2B bzw. GRB drehfest mit der Nebenwelle SB zu verbinden. Das Zahnrad G2B kämmt ständig mit dem Zahnrad G2A. Wie aus Fig. 3 hervorgeht, ist auf einer Zwischenwelle SI, welche sich im Getriebeghäuse 20 in der Nähe der Eingangswelle SA sowie der Nebenwelle SB befindet, ein Umkehrzwischenzahnrad GRI angeordnet. Entweder ist die Zwischenwelle SI drehbar in dem Getriebegehäuse 20 gelagert, oder das Umkehrzwischenzahnrad GRI ist drehbar auf der Zwischenwelle SI gelagert. Das Zahnrad GRA kämmt ständig mit dem Umkehrzwischenzahnrad GRI, welches seinerseits ständig mit dem Zahnrad GRB kämmt. Auf der Nebenwelle SB sind mehrere Stirnräder GBB, G3B, G1B, G4B und GCB drehfest angeordnet. Die Zahnräder G3B, G1B und G4B kämmen ständig mit den Zahnrädern G3A, G1A bzw. G4A.

Auf der Ausgangswelle SC sind gemäß Fig. 2 von links nach rechts die Kupplungen CB, CD und CC angeordnet, die unabhängig voneinander betätigbar sind, um wahlweise die zugehörigen Zahnräder GBC, GDC bzw. GCC drehfest mit der Ausgangswelle SC zu verbinden. Die Zahnräder GBC, GDC und GCC kämmen ständig mit den Zahnrädern GBB, G1B bzw. GCB.

Das Zahnrad GCC ist als Teil eines Doppelzahnrades ausgebildet, dessen anderer Teil das Sonnenrad GAS einer insgesamt mit 28 bezeichneten Planetenanordnung ist. Der Planetenträger GAPC ist drehfest auf der Ausgangswelle SC befestigt und trägt mehrere Planetenräder GAP, die ständig mit dem Sonnenrad GAS in Eingriff stehen. Der Planetenträger GAPC ist von einem drehbar gelagerten Ringrad GAR umgeben, welches ständig mit den Planetenrädern GAP kämmt. Durch die unabhängig betätigbare Kupplung CA läßt sich das Ringrad GAR drehfest gegenüber dem Getriebegehäuse 20 festsetzen.

Die PTO-Zahnräder GPC1 und GPC2 sind als Doppelzahnrad ausgebildet und drehbar auf der Ausgangswelle SC gelagert. Das Zahrad GPC1 kämmt ständig mit dem Zahnrad G2B, während das Zahnrad GPC2 ständig mit dem PTO-Zahnrad GPD kämmt, welches seinerseits drehfest auf der PTO-Welle SD befestigt ist. Wird ein wahlweiser Eingriff des PTO gewünscht, so kann eine nicht dargestellte, geeignete PTO-Kupplung in dem Antriebsstrang hinter dem Ausgangskoppelstück 26 vorgesehen sein.

Die verschiedenen Zahnräder sind vorzugsweise derart ausgewählt, daß sich zwischen jeweils zwei der Vorwärtsgänge 1 bis 4 ein Untersetzungsverhältnis von 1,28 ergibt. Das Untersetzungsverhältnis für den D-Bereich wird so ausgewählt, daß die maximal gewünschte und gesetzlich zulässige Transportgeschwindigkeit bei vorgegebener Maschinendrehzahl, Reifengröße und Endantriebsuntersetzung erreichbar ist. Dann wird das C-Bereichsverhältnis so ausgewählt, daß es $1{,}28^4$ mal dem D-Untersetzungsverhältnis ist. Das B-Bereichsverhältnis wird so ausgewählt, daß es $1{,}28^{4{,}5}$ mal dem D-Verhältnis ist, und das A-Bereichsverhältnis wird so ausgewählt, daß es $1{,}28^8$ mal dem D-Verhältnis ist. Die Verhältnisse sind theoretisch bevorzugte Werte. Bei einer bevorzugten Ausgestaltung enthalten die Zahnräder Zähnezahlen entsprechend der Tabelle 2:

## Tabelle 2

| Zahnrad | Zähnezahl | | Zahnrad | Zähnezahl |
|---|---|---|---|---|
| G1A | 42 | | GAS | 36 |
| G1B | 61 | | GAP | 15 |
| G2A | 49 | | GAR | 66 |
| G2B | 55 | | GBB | 31 |
| G3A | 55 | | GBC | 87 |
| G3B | 49 | | GCB | 34 |
| G4A | 61 | | GCC | 84 |
| G4B | 42 | | GDC | 58 |
| GRA | 29 | | GPC1 | 64 |
| GRI | 46 | | GPC2 | 38 |
| GRB | 48 | | GPD | 61 |

Das dargestellte Getriebe ist mit einem optionalen mechanischen Vorderradantrieb versehen, der eine drehbar gelagerte Vorderradantriebswelle SF, die axial mit der Ausgangswelle SC fluchtet, enthält. Die Vorderradantriebswelle SF ist durch eine unabhängig betätigbare Kupplung CF wahlweise mit der Ausgangswelle SC drehfest verbindbar.

Eine Parkbremse 29 läßt sich wahlweise einrücken, wobei der Planetenträger GAPC drehfest mit dem Getriebegehäuse 20 verbunden wird. Da der Planetenträger GAPC drehfest mit der Ausgangswelle SC verbunden ist, läßt sich durch Betätigung der Parkbremse 29 die Ausgangswelle SC abbremsen.

Der Boden des Getriebegehäuses 20 dient vorzugsweise als Sumpf für das Schmieröl des Getriebes. Im Bodenbereich können ein Filter 30 und eine Ölförderpumpe 31 vorgesehen sein. Vorzugsweise wird das PTO-Zahnrad GPD von einer feststehenden Abschirmung 32 eingehüllt, die vermeidet, daß das von der Ölförderpumpe 31 anzusaugende Öl aufgewirbelt wird.

Vorzugsweise wird eine Hilfspumpe 33 durch die Ausgangswelle SC angetrieben. Bewegt sich das Fahrzeug, obwohl in das Eingangskuppelstück 22 keine Leistung eingespeist wird (beispielsweise wenn die Antriebsmaschine aussetzt), so wird über das Ausgangskuppelstück 24 Leistung zurück in das Getriebe geleitet. Die Hilfspumpe 33 kann dann eine Hilfsversorgung des hydraulischen Lenkungskreises und dergleichen übernehmen.

Vorzugsweise ist auf der Umfangsfläche der Trommel der Kupplung CB oder einer der anderen Kupplungen der Ausgangswelle SC ein Zahnrad 34 oder eine ähnliche Struktur angeordnet. Die Trommel der Kupplung CB dreht sich mit der Ausgangswelle SC, so daß das Zahnrad 34 als Indikator für die Ausgangsdrehzahl des Getriebes dient. Ein in Fig. 3 schematisch dargestellter Drehzahlsensor 35 kann auf übliche Weise die Drehgeschwindigkeit des Zahnrades 34 messen und ein der Ausgangsgeschwindigkeit des Getriebes und der Fahrzeuggeschwindigkeit entsprechendes Signal ausgeben.

Falls gewünscht kann auf dem Ende der Eingangswelle SA oder einer anderen Welle eine Riemenscheibe 36 vorgesehen sein.

Die verschiedenen in der Zeichnung dargestellten Kupplungen und Bremsen können durch übliche hydraulische und/oder elektrische trische Systeme gesteuert werden. Derartige Systeme sind hinlänglich bekannt und werden daher hier nicht näher beschrieben. Entsprechendes gilt für die dargestellten Lagerungen, Schmiersysteme und dergleichen.

### Betriebsweise

Das vorliegende Getriebe enthält 16 Vorwärts- und 4 Rückwärtsübersetzungen, die durch Betätigungen der Kupplungen entsprechend den Angaben in Tabelle 3 einstellbar sind:

## Tabelle 3

| Gang | Kupplung | Ratio | %-Änder. | km/h | m/h | Mesh | SE |
|------|----------|-------|----------|------|-----|------|----|
| 1 | C1,CC,CA | 10,167 | | 2,23 | 1,39 | 3 | |
| 2 | C2,CC,CA | 7,857 | 29,4 | 2,89 | 1,79 | 3 | 1 |
| 3 | C3,CC,CA | 6,236 | 26,0 | 3,64 | 2,26 | 3 | 1 |
| 4 | C4,CC,CA | 4,820 | 29,4 | 4,71 | 2,92 | 3 | 1 |
| 5 | C1,CB | 4,076 | 18,2 | 5,57 | 3,46 | 2 | 2 |
| 6 | C1,CC | 3,588 | 13,6 | 6,32 | 3,93 | 2 | 1 |
| 7 | C2,CB | 3,150 | 13,9 | 7,20 | 4,47 | 2 | 2 |
| 8 | C2,CC | 2,773 | 13,6 | 8,18 | 5,08 | 2 | 1 |
| 9 | C3,CB | 2,500 | 10,9 | 9,07 | 5,64 | 2 | 2 |
| 10 | C3,CC | 2,201 | 13,6 | 10,31 | 6,40 | 2 | 1 |
| 11 | C4,CB | 1,932 | 13,9 | 11,74 | 7,29 | 2 | 2 |
| 12 | C4,CC | 1,701 | 13,6 | 13,33 | 8,29 | 2 | 1 |
| 13 | C1,CD | 1,381 | 23,2 | 16,43 | 10,21 | 2 | 2 |
| 14 | C2,CD | 1,067 | 29,4 | 21,25 | 13,21 | 2 | 1 |
| 15 | C3,CD | 0,847 | 26,0 | 26,78 | 16,64 | 2 | 1 |
| 16 | C4,CD | 0,655 | 29,4 | 34,65 | 21,53 | 2 | 1 |
| R1 | CR,CC,CA | -11,586 | | -1,96 | -1,22 | 4 | |
| R2 | CR,CB | -4,645 | 149,4 | -4,88 | -3,03 | 3 | 1 |
| R3 | CR,CC | -4,089 | 13,6 | -5,55 | -3,45 | 3 | 1 |
| R4 | CR,CD | -1,574 | 159,8 | -14,41 | -8,96 | 3 | 2 |

Wählt die Bedienungsperson einen Gang gemäß der ersten Spalte der Tabelle 3 aus, so werden die in der zweiten Spalte angeführten Kupplungen betätigt. Das Getriebe erzeugt dann eine Gesamtuntersetzung zwischen Eingangskuppelstück 22 und Ausgangskuppelstück 24, die unter "Ratio" in der dritten Spalte angegeben ist. Der unter "%-Änder." angegebene Wert stellt die %-uale Änderung zwischen dem Übertragungsverhältnis des in der Zeile angegebenen Ganges und dem des unmittelbar vorangehenden Ganges dar. In den Spalten unter km/h und m/h wird die sich ergebende Fahrzeuggeschwindigkeit in Kilometern pro Stunde bzw. in Meilen pro Stunde angegeben, wobei vorausgesetzt wird, daß der Gashebel so eingestellt ist, daß sich eine Maschinendrehzahl von 2100 Umdrehungen pro Minute einstellt, daß die Antriebsreifen einen Abrollradius von 93,7 cm aufweisen und daß das Untersetzungsverhältnis aller Komponenten (beispielsweise des Differentials und des Endantriebs) zwischen dem Ausgangskuppelstück 24 und der Radnabe des Antriebsrades in etwa 33,75 beträgt. In der Spalte "Mesh" ist die Anzahl der miteinander in Eingriff stehenden Zahnradpaare zwischen dem Eingangskuppelstück 22 und dem Ausgangskuppelstück 24 für den zugehörigen Gang angegeben. Die Spalte "SE" gibt an, wie viele Kupplungen in ihrer Einstellung geändert werden müssen, um aus dem nächst tieferen Gang in den in der Zeile angegebenen Gang umzuschalten.

In Fig. 4 sind die Untersetzungsverhältnisse des Getriebes und die sich ergebenden Geschwindigkeiten für jeden Gang graphisch dargestellt. Wie ersichtlich, fallen die Gänge in drei voneinander getrennte Bereiche, nämlich für den PTO-Betrieb, für den Feld- oder Geräte-Betrieb, in dem die Bodenbearbeitung erfolgt (Hauptarbeits-Betrieb), und für den Tranport-Betrieb. Relativ große Lücken zwischen den Untersetzungsverhältnissen benachbarter Gänge sind in dem PTO- und dem Tranport-Bereich gegeben, während in dem Hauptarbeitsbereich (wo eine enge Abstufung wünschenswert ist) eine hohe Konzentration eng beieinanderliegender Untersetzungsverhältnisse liegt. Es soll jedoch hervorgehoben werden, daß entsprechend den geringen Geschwindigkeiten in dem PTO-Bereich selbst eine relativ große Lücke lediglich eine Fahrzeuggeschwindigkeitsänderung von gerade 0,6 bis 1,0 km/h hervorruft. Es geht ferner offensichtlich aus Fig. 4 hervor, daß durch die Ineinanderschachtelungen der B- und C-Bereiche der Hauptarbeitsbereich eher wie ein einziger Bereich mit acht Gängen als zwei einander nachgeordnete Bereiche mit jeweils vier Gängen wirkt.

Aus Tabelle 3 geht hervor, daß es fünf Vorwärtsgeschwindigkeitswechsel gibt, die die Umschaltung zweier Kupplungen erfordern. Zwei dieser Geschwindigkeitswechsel (von Gang 4 nach Gang 5 und von Gang 12 nach Gang 13) führen zu relativ großen Änderungen der Untersetzungsverhältnisse. Die Fig. 4 zeigt, daß diese Geschwindigkeitswechsel zwischen dem PTO-Bereich und dem Hauptarbeitsbereich einerseits sowie zwischen dem Hauptarbeitsbereich und dem Transportbereich andererseits liegen. Da diese Geschwindigkeitswechsel bei einem normalen Betrieb nur selten vorgenommen werden, wird hier die durch die Umschaltung zweier Kupplungen relativ schlechte Schaltqualität im praktischen Betrieb so gut wie nicht wahrgenommen.

Die übrigen drei Vorwärtsgeschwindigkeitswechsel, bei denen zwei Kupplungen betätigt werden, fallen alle in den Hauptarbeitsbereich und werden damit regelmäßig vorgenommen. Jedoch sind die Drehzahl/Drehmoment-Differenzen innerhalb des Getriebes bei diesen Geschwindigkeitswechseln sehr gering, so daß die Schaltqualität noch als hoch angesehen werden kann.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen. So wurden die Zähnezahlen für die Zahnräder des Getriebes nur beispielhaft angegeben. Es können zahlreiche andere Zähnezahlen mit ähnlichen Endergebnissen ausgewählt werden. Auch die beschriebenen Untersetzungsverhältnisse, die in zwei Bereichen bei 28 % und in einem mittleren Bereich bei 13 % liegen, können ohne weiteres auf besondere Anwendungsfälle angepaßt werden. Das dargestellte Getriebe weist eine Planetenanordnung auf, durch die sich für den Bereich A ein sehr großes Untersetzungsverhältnis ergibt. Ist ein kleines Untersetzungsverhältnis ausreichend, so kann an Stelle der Planetenanordnung auch ein Stirnradgetriebe oder dergleichen Verwendung finden.

## Patentansprüche

1. Getriebe mit
   a) einem Getriebegehäuse (20), in dem eine erste (SA), zweite (SB) und dritte (SC) Welle im wesentlichen parallel zueinander ausgerichtet und drehbar gelagert sind, wobei wenigstens die erste (SA) und dritte (SC) Welle Mittel (22, 24) zur Einspeisung oder Ausgabe von Leistung aufweisen,
   b) einem ersten (G3A), zweiten (G1A) und dritten (G4A) drehbar auf der ersten Welle (SA) gelagerten Zahnrad und einem vierten (G2A) und fünften (GRA) drehfest auf der ersten Welle (SA) gelagerten Zahnrad,
   c) einer ersten (C3), zweiten (C1) und dritten (C4) Kupplung, durch die wahlweise das erste (G3A), zweite (G1A) bzw. dritte (G4A) Zahnrad drehfest mit der ersten Welle (SA) verbindbar ist,
   d) einem sechsten (G2B) und siebten (GRB) drehbar auf der zweiten Welle (SB) gelagerten Zahnrad und einem achten (GBB), neunten (G3B), zehnten (G1B), elften (G4B) und zwölften (GCB) drehfest auf der zweiten Welle (SB) gelagerten Zahnrad, wobei das sechste (G2B), neunte (G3B), zehnte (G1B) und elfte (G4B) Zahnrad ständig mit dem vierten (G2A), ersten (G3A), zweiten (G1A) bzw. dritten (G4A) Zahnrad kämmt,
   e) einer vierten (C2) und fünften (CR) Kupplung, durch die wahlweise das sechste (G2B) bzw. siebte (GRB) Zahnrad drehfest mit der zweiten Welle (SB) verbindbar ist,
   f) einem in dem Getriebegehäuse (20) benachbart zur ersten (SA) und zweiten (SB) Welle drehbar gelagerten Umkehrzahnrad (GRI), das ständig mit dem fünften (GRA) und siebten (GRB) Zahnrad kämmt,
   g) einem dreizehnten (GBC), vierzehnten (GDC) und fünfzehnten (GCC) drehbar auf der dritten Welle (SC) gelagerten Zahnrad, das ständig mit dem achten (GBB), zehnten (G1B) bzw. zwölften (GCB) Zahnrad kämmt,
   h) einer sechsten (CB), siebten (CD) und achten (CC) Kupplung, durch die wahlweise das dreizehnte (GBC), vierzehnte (GDC) bzw. fünfzehnte (GCC) Zahnrad drehfest mit der dritten Welle (SC) verbindbar ist, und
   i) Verzahnungsmitteln zur wahlweisen Verbindung des zwölften Zahnrades (GCB) mit der dritten Welle (SC).

2. Getriebe nach Anspruch 1, dadurch gekennzeichnet, daß die Abstufungen zwischen zwei benachbarten Getriebeübertragungsverhältnissen, die sich für einen ersten bzw. dritten Bereich ergeben, in etwa doppelt so groß sind wie die Abstufungen zwischen zwei benachbarten Getriebeübertragungsverhältnissen, die sich für einen zweiten Bereich ergeben.

3. Getriebe nach Anspruch 2, dadurch gekennzeichnet, daß die Abstufungen benachbarter Getriebeübertragungsverhältnisse bei Serienschaltung des ersten Bereiches bzw. des dritten Bereiches mit den Vorwärtsgängen ungefähr 28 % betragen und bei Serienschaltung des zweiten Bereiches mit den Vorwärtsgängen ungefähr 13 % betragen.

4. Getriebe nach einem der Ansprüche 1 bis 3, dadurch gekennzeichnet, daß die Abstufungen der Getriebeübertragungsverhältnisse so gewählt sind, daß bei Umschaltungen von einem zusammengesetzten Getriebeübertragungsverhältnis zu dem nächst höheren Getriebeübertragungsverhältnis nur dann relativ große Drehmomentänderungen innerhalb des Getriebes auftreten, wenn eine Umschaltung von dem ersten Bereich, der in Serie mit dem größten Vorwärtsgang liegt, zu dem zweiten Bereich, der in Serie mit dem kleinsten Vorwärtsgang liegt, oder eine Umschaltung von dem zweiten Bereich, der in Serie mit dem größten Vorwärtsgang liegt, zu dem dritten Bereich, der in Serie mit dem kleinsten Vorwärtsgang liegt, erfolgt.

5. Getriebe nach einem der Ansprüche 1 bis 4, dadurch gekennzeichnet, daß ein zweiter Bereich durch einen ersten und einen zweiten Subsidiarbereich gebildet wird, wobei die Übertragungsverhältnisse der Subsidiarbereiche derart abgestuft sind, daß die zusammengesetzten Getriebeübertragungsverhältnisse, die sich bei Serienschaltung des ersten Subsidiarbereiches mit den Vorwärtsgängen ergeben, und die zusammengesetzten Getriebeübertragungsverhältnisse, die sich bei Serienschaltung des zweiten Subsidiarbereiches mit den Vorwärtsgängen ergeben, alternierend ineinander geschichtet sind.

6. Getriebe nach einem der Ansprüche 1 bis 5, gekennzeichnet durch
a) ein sechzehntes (GAS) drehbar auf der dritten Welle (SC) gelagertes Zahnrad, das mit dem fünfzehnten (GCC) Zahnrad als Doppelzahnrad ausgebildet ist,
b) einen drehfest auf der dritten Welle (SC) gelagerten Planetenträger (GAPC), der wenigstens ein Planetenrad (GAP) trägt, und ein drehbar über dem Planetenträger (GAPC) gelagertes Ringrad (GAR), wobei das Planetenrad (GAP) ständig mit dem sechzehnten Zahnrad (GAS) und dem Ringrad (GAR) kämmt, und
c) eine neunte Kupplung (CA), durch die wahlweise das Ringrad (GAR) gegenüber dem Getriebegehäuse (20) festlegbar ist.

7. Getriebe nach Anspruch 6, gekennzeichnet durch eine Parkbremse (29), durch die wahlweise der Planetenträger (GAPC) gegenüber dem Getriebegehäuse (20) festlegbar ist.

8. Getriebe nach einem der Ansprüche 1 bis 7, dadurch gekennzeichnet, daß bei zehn der möglichen Vorwärtsgangwechsel eine Umschaltung zwischen zwei benachbarten Gängen durch die Betätigung lediglich einer Kupplung ausführbar ist und daß bei den übrigen Vorwärtsgangwechseln lediglich zwei Kupplungen zu betätigen sind.

9. Getriebe nach Anspruch 8, dadurch gekennzeichnet, daß einer der Vorwärtsgangwechsel, der die Betätigung zweier Kupplungen erfordert, ein Wechsel von der ersten zur zweiten Gruppe ist, und ein anderer Vorwärtsgangwechsel, der die Betätigung zweier Kupplungen erfordert, ein Wechsel von der zweiten zur dritten Gruppe ist.

10. Getriebe nach einem der Ansprüche 6 bis 9, dadurch gekennzeichnet, daß das durch den Eingriff des vierzehnten Zahnrades (GDC) mit dem zehnten Zahnrad (G1B) hervorgerufene Untersetzungsverhältnis ein Grunduntersetzungsverhältnis liefert, daß ferner das durch den Eingriff des fünfzehnten Zahnrades (GCC) mit dem zwölften Zahnrad (GCB) hervorgerufene Untersetzungsverhältnis ungefähr $1,28^4$ mal dem Grunduntersetzungsverhältnis ist, daß ferner das durch den Eingriff des dreizehnten Zahnrades (GBC) mit dem achten Zahnrad (GBB) hervorgerufene Untersetzungsverhältnis ungefähr $1,28^{4,5}$ mal dem Grunduntersetzungsverhältnis ist und daß ferner das sich durch die Kombination der Eingriffe des fünfzehnten Zahnrades (GCC) mit dem zwölften Zahnrad (GCB), dem sechzehnten Zahnrad (GAS) mit dem Planetenrad (GAP) und dem Planetenrad (GAP) mit dem Ringrad (GAR) ergebende Untersetzungsverhältnis ungefähr $1,28^8$ mal dem Grunduntersetzungsverhältnis ist.

11. Getriebe nach einem der Ansprüche 1 bis 10, gekennzeichnet durch

a) ein siebzehntes (GPC1) und ein achtzehntes (GPC2) drehbar auf der dritten Welle (SC) gelagertes Zahnrad, die zusammen als Doppelzahnrad ausgebildet sind, wobei das siebzehnte Zahnrad (GPC1) ständig mit dem sechsten Zahnrad (G2B) kämmt,

b) eine vierte drehbar in dem Getriebegehäuse (20) gelagerte Welle (SD), die Mittel (26) zur Einspeisung oder Ausgabe von Leistung aufweist, und

c) ein neunzehntes drehfest auf der vierten Welle (SD) angeordnetes Zahnrad (GPD), welches ständig mit dem achtzehnten Zahnrad (GPC2) kämmt.

12. Getriebe nach Anspruch 11, dadurch gekennzeichnet, daß der Boden des Getriebegehäuses (20) als Schmiermittelsumpf dient und daß die vierte Welle (SD) eine Förderpumpe (31), die Schmiermittel aus dem Sumpf fördert, antreibt.

13. Getriebe nach einem der Ansprüche 1 bis 12, gekennzeichnet durch

a) eine drehbar in dem Getriebegehäuse (20) gelagerte, mit der dritten Welle (SC) fluchtende Vorderradantriebswelle (SF), die Mittel zur Einspeisung oder Ausgabe von Leistung aufweist, und

b) eine Vorderradantriebskupplung (CF), durch die wahlweise eine Drehübertragung zwischen der dritten Welle (SC) und der Vorderradantriebswelle (SF) herstellbar ist.

14. Getriebe nach einem der Ansprüche 1 bis 13, dadurch gekennzeichnet, daß die erste Welle (SA) eine Getriebeeingangswelle und die dritte Welle (SC) eine mit den angetriebenen Fahrzeugrädern in Verbindung stehende Getriebeausgangswelle ist, und daß das Getriebe eine durch die dritte Welle (SC) angetriebene Hilfspumpe (33) enthält, die im Notfall Schmierflüssigkeit liefert, wenn das Fahrzeug sich bewegt, ohne daß die Eingangswelle (SA) angetrieben wird.

15. Getriebe nach einem der Ansprüche 1 bis 14, gekennzeichnet durch

a) eine an eine äußere Oberfläche der sechsten (CB), siebten (CD) oder achten (CC) Kupplung angeformte Verzahnung (34) und

b) einen Geschwindigkeitssensor (35), der die jeweilige Geschwindigkeit der Verzahnung (34) erfaßt.

## Claims

1. A transmission with

a) a transmission housing (20) in which first (SA), second (SB) and third (SC) rotatably mounted shafts are aligned substantially parallel to one another, wherein at least the first (SA) and third (SC) shafts have means (22, 24) for feeding in or taking off power,

b) first (G3A), second (G1A) and third (G4A) gearwheels rotatably mounted on the first shaft (SA) and fourth (G2A) and fifth (GRA) gearwheels fast on the first shaft (SA),

c) first (C3), second (C1) and third (C4) clutches through which the first (G3A), second (G1A) and third (G4A) gearwheels respectively can be coupled rotationally fast to the first shaft (SA),

d) sixth (G2B) and seventh (GRB) gearwheels rotatably mounted on the second shaft (SB) and eighth (GBB), ninth (G3B), tenth (G1B), eleventh (G4B) and twelfth (GCB) gearwheels fast on the second shaft (SB), the sixth (G2B), ninth (G3B), tenth (G1B) and eleventh (G4B) gearwheels being in constant mesh with the fourth (G2A), first (G3A), second (G1A) and third (G4A) gearwheels respectively,

e) fourth (C2) and fifth (CR) clutches through which the sixth (G2B) and seventh (GRB) gearwheels respectively can be selectively coupled non-rotatably to the second shaft (SB),

f) a reversing gearwheel (GRI) rotatably mounted in the transmission housing (20) adjacent the first (SA) and second (SB) shafts and in constant mesh with the fifth (GRA) and seventh (GRB) gearwheels,

g) thirteenth (GBC), fourteenth (GDC) and fifteenth (GCC) gearwheels rotatably mounted on the third shaft (SC) and in constant mesh with the eighth (GBB), tenth (G1B) and twelfth (GCB) gearwheels respectively,

h) sixth (CB), seventh (CD) and eighth (CC) clutches through which the thirteenth (GBC), fourteenth (GDC) and fifteenth (GCC) gearwheels respectively can be coupled non-rotatably to the third shaft (SC), and

i) tooth means for selective coupling of the twelfth gearwheel (GCB) to the third shaft (SC).

2. A transmission according to claim 1, characterized in that the step between two adjacent gear ratios which result in a first or third range is approximately twice as large as the step between two adjacent gear ratios which result in a second range.

3. A transmission according to claim 2, characterized in that the step between adjacent gear ratios with selection of the first or third range in series with the forward gears amounts to about 28% and with selection of the second range in series with the forward gears to about 13%.

4. A transmission according to any of claims 1 to 3, characterized in that the steps of the gear ratios are so selected that, on shifting from one combined gear ratio to the next higher gear ratio, relatively large changes in torque occur within the transmission only when shifting from the first range in series with the highest forward gear to the second range in series with the lowest forward gear, or when shifting from the second range in series with the highest forward gear to the third range in series with the lowest forward gear.

5. A transmission according to any of claims 1 to 4, characterized in that a second range is formed by first and second subsidiary ranges, wherein the gear ratios of the subsidiary ranges are so stepped that the combined transmission ratio which results from selection of the first subsidiary range in series with the forwards gears and the combined transmission ratios which result from selection of the second subsidiary range in series with the forward gears are interleaved alternately with each other.

6. A transmission according to any of claims 1 to 5, characterized by
   a) a sixteenth (GAS) gearwheel rotatably mounted on the third shaft (SC) and formed as a double gearwheel with the fifteenth (GCC) gearwheel,
   b) a planet carrier (GAPC) mounted non-rotatably on the third shaft (SC) and carrying at least one planet wheel (GAP), and an annulus (GAR) mounted rotatably around the planet carrier (GAPC), wherein the planet wheel (GAP) is in constant mesh with the sixteenth gearwheel (GAS) and the annulus (GAR), and
   c) a ninth clutch (CA) through which the annulus (GAR) can be selectively fixed relative to the transmission housing (20).

7. A transmission according to claim 6, characterized by a parking brake (29) through the planet carrier (GAPC) can be selective fixed relative to the transmission housing (20).

8. A transmission according to any of claims 1 to 7, characterized in that a change between two adjacent gears can be carried out with only one clutch in the case of ten of the possible forward gears and with only two clutches in the case of the other forward gears.

9. A transmission according to claim 8, characterized in that one of the forward gear shifts which requires operation of two clutches is a change from the first to the second range and another forward gear shift which requires operation of two clutches is a change from the second to the third range.

10. A transmission according to any of claims 6 to 9, characterized in that the reduction ratio caused by the engagement of the fourteenth gearwheel (GDC) with the tenth gearwheel (G1B) provides a basic reduction ratio, further in that the reduction ratio caused by engagement of the fifteenth gearwheel (GCC) with the twelfth gearwheel (GCB) is about $1.28^4$ times the basic reduction ratio, further in that the reduction ratio caused by engagement of the thirteenth gearwheel (GBC) with the eighth gearwheel (GBB) is about $1.28^{4.5}$ times the basic reduction ratio and further in that the reduction ratio provided by the combination of engagement of the fifteenth gearwheel (GCC) with the twelfth gearwheel (GCB), with sixteenth gearwheel (GAS) with the planet wheel (GAP) and of the planet wheel (GAP) with the annulus (GAR) is about $1.28^8$ times the basic reduction ratio.

11. A transmission according to any of claims 1 to 10, characterized by
   a) seventeenth (GPC1) and eighteenth (GPC2) gearwheels rotatably mounted on the third shaft (SC) and formed together as a double gearwheel, wherein the seventeenth gearwheel (GPC1) is in constant mesh with the sixth gearwheel (G2B),
   b) a fourth shaft (SD) rotatably mounted in the transmission housing (20), which has means (26) for feeding in or taking off power, and
   c) a nineteenth gearwheel (GPD) fixed on the fourth shaft (SD) and in constant mesh with the eighteenth gearwheel (GPC2).

**12.** A transmission according to claim 11, characterized in that the bottom of the transmission housing (20) serves as lubricant sump and in that the fourth shaft (SD) drives a feed pump (31) which feeds lubricant out of the sump.

**13.** A transmission according to any of claims 1 to 12, characterized by
a) a front-wheel drive shaft (SF) which is mounted rotatably in the transmission housing (20), is aligned with the third shaft (SC) and has means for feeding in or taking off power, and
b) a front-wheel drive clutch (CF) through which rotary transmission can be selectively produced between the third shaft (SC) and the front-wheel drive shaft (SF).

**14.** A transmission according to any of claims 1 to 13, characterized in that the first shaft (SA) is a transmission input shaft and the third shaft (SC) is a transmission output shaft coupled to the driven vehicle wheels, and in that the transmission includes an auxiliary pump (33) driven by the third shaft (SC), which supplies lubricant in an emergency, when the vehicle moves without the input shaft (SA) being driven.

**15.** A transmission according to any of claims 1 to 14, characterized by
a) teeth (34) formed on an outer surface of the sixth (CB), seventh (CD) or eighth (CC) clutch and
b) a speed sensor (35) which detects the current speed of the teeth (34).

**Revendications**

**1.** Transmission comportant
a) un capteur de transmission (20), dans lequel un premier arbre (SA), un second arbre (SB) et un troisième arbre (SC) sont alignés sensiblement parallèlement entre eux et sont montés de manière à pouvoir tourner, au moins le premier arbre (SA) et le troisième arbre (SC) comportant des moyens (22,24) pour introduire et délivrer une puissance,
b) un premier pignon (G3A), un second pignon (GIA) et un troisième pignon (G4A), qui sont montés de manière à pouvoir tourner sur le premier arbre (SA), et un quatrième pignon (G2A) et un cinquième pignon (GRA), qui sont montés avec blocage en rotation sur le premier arbre (SA),
c) un premier accouplement (C3), un second accouplement (C1) et un troisième accouplement (C4), à l'aide desquels au choix le premier pignon (G3A), le second pignon (G1A) ou le troisième pignon (G4A) peut être relié avec blocage en rotation au premier arbre (SA),
d) un sixième pignon (G2B) et un septième pignon (GRB) montés de manière à pouvoir tourner sur le second arbre (SB), et un huitième pignon (GBB), un neuvième pignon (G3B), un dixième pignon (G1B), un onzième pignon (G4B) et un douzième pignon (GCB) montés avec blocage en rotation sur le second arbre (SB), le sixième pignon (GDB), le neuvième pignon (G3B), le dixième pignon (G1B) et le onzième pignon (G4B) engrenant en permanence avec le quatrième pignon (G2A), le premier pignon (G3A), le second pignon (G1A) et le troisième pignon (G4A),
e) un quatrième accouplement (C2) et un cinquième accouplement (CR), à l'aide desquels au choix le sixième pignon (G2B) ou le septième pignon (GRB) peut être relié avec blocage en rotation au second arbre (SB),
f) un pignon d'inversion (GRI), monté de manière à pouvoir tourner dans le carter de transmission (20) au voisinage du premier arbre (SA) et du second arbre (SB) et qui engrène en permanence avec le cinquième pignon (GRA) et le septième pignon (GRB),
g) un treizième pignon (GBC), un quatorzième pignon (GDC) et un quinzième pignon (GCC) montés de manière à pouvoir tourner sur le troisième arbre (SC) et qui engrènent en permanence avec le huitième pignon (GBB), le dixième pignon (G1B) et le douzième pignon (GCB),
h) un sixième accouplement (CB), un septième accouplement (CD) et un huitième accouplement (CC), grâce auxquels au choix le treizième pignon (GBC), le quatorzième pignon (GDC) ou le quinzième pignon (GCC) peut être relié avec blocage en rotation au troisième arbre (SC), et
i) des moyens formant denture pour relier au choix le douzième pignon (GCB) au troisième arbre (SA).

**2.** Transmission selon la revendication 1, caractérisée en ce que les échelonnements entre deux rapports de transmission voisins, qu'on obtient pour les première et troisième gammes, sont approximativement doubles des échelonnements entre deux rapports de transmission voisins, qu'on obtient pour une seconde gamme.

**3.** Transmission selon la revendication 2, caractérisée en ce que les échelonnements entre deux rapports de transmission voisins sont égaux, dans le cas de la disposition en série de la première gamme et de la troisième gamme avec les vitesses de marche avant, à environ 28 % et, dans le cas de la disposition en série de la seconde gamme avec les vitesses de marche avant, approximativement à 13 %.

**4.** Transmission selon l'une des revendications 1 à 3, caractérisée en ce que les échelonnements des rapports de transmission sont choisis de telle sorte que, dans le cas du passage d'un rapport de transmission composé au rapport de transmission immédiatement supérieur, des variations relativement importantes du couple apparaissent à l'intérieur de la transmission uniquement lorsqu'il se produit une commutation de la première gamme, qui est située en série avec la vitesse de marche avant la plus élevée, à la seconde gamme, qui est située en série avec la vitesse de marche avant la plus faible, ou bien il se produit une commutation de la seconde gamme, qui est située en série avec la vitesse de marche avant la plus élevée, et la troisième gamme, qui est en série avec la vitesse de marche avant la plus faible.

**5.** Transmission selon l'une des revendications 1 à 4, caractérisée en ce qu'une seconde gamme est formée par une première gamme secondaire et une seconde gamme secondaire, les rapports de transmission des gammes secondaires étant échelonnés de telle sorte que les rapports de transmission combinés, que l'on obtient lors de la disposition en série de la première gamme secondaire avec les vitesses de marche avant, et les rapports de transmission combinés que l'on obtient lors de la disposition en série de la seconde gamme secondaire avec les vitesses de marche avant, sont imbriqués d'une manière alternée.

**6.** Transmission selon l'une des revendications 1 à 5, caractérisé par
a) un seizième pignon (GAS) monté de manière à pouvoir tourner sur le troisième arbre (SC) et qui est réalisé conjointement avec le quinzième pignon (GCC) sous la forme d'un pignon double,
b) un support (GAPC) de pignon planétaire, qui est monté avec blocage en rotation sur le troisième arbre (SC) et qui porte au moins une roue planétaire (GAP), et une couronne dentée (GAR) montée de manière à pouvoir tourner par l'intermédiaire du support de roue planétaire (GAPC), la roue planétaire (GAP) engrenant en permanence avec le seizième pignon (GAS) et la roue dentée (GAR), et
c) un levier d'accouplement (CA), à l'aide duquel au choix la roue dentée (GAR) peut être fixée par rapport au carter de transmission (20).

**7.** Transmission selon la revendication 6, caractérisée par un frein de parcage (29), à l'aide duquel au choix le support (GAPC) de roue planétaire peut être bloqué par rapport au carter de transmission (20).

**8.** Transmission selon l'une des revendications 1 à 7, caractérisée en ce que pour dix des changements possibles de vitesse de marche avant, une commutation peut être exécutée entre deux rapports voisins, au moyen de l'actionnement d'un seul accouplement, et que, pour les autres changements de vitesse de marche avant, seuls deux accouplements doivent être actionnés.

**9.** Transmission selon la revendication 8, caractérisée en ce que l'un des changements de vitesse de marche avant, qui requiert l'actionnement de deux accouplements, est un changement de vitesse le faisant passer du premier groupe au second groupe, et qu'un autre changement de vitesse de marche avant, qui requiert l'actionnement de deux accouplements, est un changement de vitesse faisant passer du second groupe au troisième groupe.

**10.** Transmission selon l'une des revendications 6 à 9, caractérisé en ce que le rapport de transmission, qui est provoqué par l'engrènement du quatorzième pignon (GDC) avec le dixième pignon (G1B), fournit un rapport de démultiplication de base, qu'en outre le rapport de démultiplication, qui est provoqué par l'engrènement du quinzième pignon (GCC) avec le deuxième pignon (GCB) est égal à approximativement à $1,28^4$ fois le rapport de démultiplication de base, qu'en outre le rapport de démultiplication provoqué par l'engrènement du treizième pignon (GBC) avec le huitième pignon (GBB) est égal à $1,28^{4,5}$ fois le rapport de démultiplication de base et qu'en outre le rapport de démultiplication, qui est obtenu au moyen de la combinaison de l'engrènement du quinzième pignon (GCC) avec le douzième pignon (GCB), du seizième pignon (GAS) avec la roue planétaire (GAP) et de la roue planétaire (GAP) avec la roue dentée (GAR), est égal à environ $1,28^8$ fois le rapport de démultiplication de base.

**11.** Transmission selon l'une des revendications 1 à 10, caractérisée par
a) un dix-septième pignon (GPC1) et un dix-huitième pignon (GPC2) montés de manière à pouvoir tourner sur le troisième arbre (SC) et qui sont réalisés conjointement sous la forme d'un pignon double, le dix-septième pignon (GPC1) engrenant en permanence avec le sixième pignon (G2B),

b) un quatrième arbre (SD) monté de manière à pouvoir tourner dans le carter de transmission (20) et qui comporte des moyens (26) pour introduire et délivrer une puissance, et

c) un dix-neuvième pignon (GPD), qui est monté avec blocage en rotation sur le quatrième arbre (SD) et qui engrène en permanence avec le dix-huitième pignon (GPC2).

**12.** Transmission selon la revendication 11, caractérisée en ce que le fond du carter de transmission (20) est utilisé comme réservoir de lubrifiant et que le quatrième arbre (SD) entraîne une pompe d'entraînement (31), qui entraîne le lubrifiant hors du réservoir.

**13.** Transmission selon l'une des revendications 1 à 12, caractérisée par

a) un arbre (SF) d'entraînement des roues avant, qui est monté de manière à pouvoir tourner dans le carter de transmission (20) et est aligné avec le troisième arbre (SC) et comporte des moyens pour introduire et délivrer une puissance, et

b) un embrayage (CF) d'entraînement des roues avant, grâce auquel au choix une transmission de rotation peut être établie entre le troisième arbre (SC) et l'arbre (SF) d'entraînement des roues avant.

**14.** Transmission selon l'une des revendications 1 à 13, caractérisé en ce que le premier arbre (SA) est un arbre d'entrée de la transmission et le troisième arbre (SC) est un arbre de sortie de la transmission, qui est relié aux roues entraînées du véhicule, et que la transmission contient une pompe auxiliaire (33), qui est entraînée par le troisième arbre (SC) et qui, en cas d'urgence, délivre un liquide lubrifiant lorsque le véhicule se déplace, sans que l'arbre d'entraînement (SA) soit entraîné.

**15.** Transmission selon l'une des revendications 1 à 14, caractérisée par

a) une denture (34) formée sur une surface extérieure du sixième accouplement (CB), du septième accouplement (CD) et du huitième accouplement (CC), et

b) un capteur de vitesse (35), qui détecte la vitesse respective de la denture (34).

TRANSPORT
16.4 bei 34.7km/h

Bodenbearbeitung
5.6 bei 13.3km/h

PTO
2.2 bei 4.7km/h

Legende

| Bereich | SYMBOL |
|---------|--------|
| A | ◐ |
| B | ○ |
| C | ● |
| D | △ |

Gang

Fig. 4

FIG. 2a

FIG. 2b    FIG. 2c    FIG. 2d

Fig. 1

Fig. 2a

Fig. 2b

**Fig. 2c**

Fig. 2d

Fig. 3